# DEMANDE DE BREVET EUROPEEN

(11) **EP 1 102 371 A1**
(43) Date de publication de la demande: **23.05.2001**
(21) Numéro de dépôt: 00402229.9
(22) Date de dépôt: 04.08.2000
(51) Int. Cl.: H01T 4/00, H02H 9/06, H01T 4/12

(54) **Dispositif parafoudre pour réseau à basse tension**

(30) Priorité: 19.11.1999 FR 9914556
(71) Demandeur: Citel 2 C P, 92130 Issy Les Moulineaux (FR)
(72) Inventeur: Macanda, Christian, 92370 Chaville (FR)
(74) Mandataire: Abello, Michel

(57) **Abrégé**

Dispositif parafoudre pour la protection d'un circuit électrique contre des surtensions transitoires, comprenant au moins un élément de protection constitué par un éclateur à gaz, caractérisé par le fait qu'il comprend un ensemble d'éclateurs à gaz (2a-2c) connectés en parallèle et qui ont individuellement une tenue au choc inférieure à une tenue au choc souhaitée.

## Description

La présente invention concerne un dispositif parafoudre pour la protection d'un circuit électrique connecté à un réseau à basse tension contre des surtensions transitoires, du type comprenant au moins un élément de protection constitué par un éclateur à gaz.

Les éclateurs à gaz sont des éléments qui ont normalement une résistance d'isolement très élevée, pouvant être considérée comme quasiment infinie, et qui s'amorcent brusquement et deviennent conducteurs avec une résistance très faible, assimilable à un court-circuit, afin de pouvoir dériver à la terre un fort courant de décharge lorsqu'ils sont soumis à des surtensions transitoires, dont la valeur dépasse un certain seuil (tension d'amorçage de l'éclateur). Il est ainsi possible de protéger des circuits électriques situés en aval de l'éclateur contre des surtensions transitoires pouvant avoir diverses origines, comme par exemple la foudre, des perturbations industrielles, etc... Par exemple, pour des circuits électriques basse tension, c'est-à-dire des circuits électriques fonctionnant sous des tensions de l'ordre de 230/400 volts, on choisira des éclateurs à gaz ayant une tension alternative d'amorçage de l'ordre de 300 à 600 volts, la tension d'amorçage choisie étant, bien entendu, un peu supérieure à la tension normale de fonctionnement des circuits électriques à protéger.

Les éclateurs à gaz ont une tenue en courant de choc de plus ou moins limitée selon leur construction, c'est-à-dire qu'ils sont capables de laisser passer, sans destruction, une onde de choc de courant plus ou moins importante présentant des caractéristiques normalisées. La tenue en courant de choc est usuellement définie par un courant maximal de décharge, exprimé le plus souvent en kilo-ampères (kA), et par une forme d'onde, elle-même définie par deux chiffres qui correspondent respectivement au temps de montée et au temps de descente à mi-amplitude de l'onde de choc, ces deux temps étant usuellement exprimés en micro-secondes (µs). A titre d'exemple, les éclateurs à gaz les plus couramment utilisés pour protéger des circuits électriques basse tension ont une tenue en courant de choc (courant maximal de décharge) correspondant à 20 kA, 8/20 µs, ou encore 5 kA, 10/350 µs.

En service, lorsqu'une onde de choc de courant apparaît, si cette onde présente des caractéristiques inférieures à la tenue en courant de choc de l'éclateur sollicité, l'arc électrique amorcé dans l'éclateur va s'éteindre sans endommager l'éclateur. Les caractéristiques de base de ce dernier (tension d'amorçage statique, résistance d'isolement...) ne seront donc pas modifiées, de sorte que l'éclateur pourra à nouveau remplir son rôle d'élément de protection lorsque surviendra une autre surtension transitoire. Par contre, si l'onde de choc de courant présente des caractéristiques supérieures à la tenue en courant de choc de l'éclateur sollicité, il y a un grand risque que l'arc électrique amorcé dans l'éclateur endommage celui-ci. Si tel est le cas, la tension d'amorçage de l'éclateur va s'élever fortement. Par exemple, elle va passer de 300 volts à 700 volts ou plus, de sorte que, s'il survient ensuite une surtension transitoire dont l'amplitude est inférieure à la nouvelle tension d'amorçage de l'éclateur, celui-ci ne sera plus en mesure de remplir son rôle d'élément de protection. Il peut même arriver que l'arc électrique endommage l'éclateur à un point tel qu'il ne soit plus du tout capable de s'amorcer en cas de surtension (état de non-amorçage).

Les surtensions transitoires sont des phénomènes qui se produisent de plus souvent de façon totalement imprévisible dans le temps, et dont on ne peut pas non plus prévoir l'intensité. C'est pourquoi, afin d'augmenter les chances qu'un dispositif parafoudre soit capable de résister, sans destruction, à une forte surtension transitoire et/ou à plusieurs surtensions transitoires survenant de manière successive, il est parfois souhaitable de pouvoir utiliser un dispositif parafoudre ayant une tenue renforcée au choc.

Une solution évidente à ce problème consiste à utiliser un éclateur à gaz ayant intrinsèquement une plus grande tenue en courant de choc. De tels éclateurs à gaz existent sur le marché. Ils présentent toutefois l'inconvénient d'être beaucoup plus encombrants et beaucoup plus coûteux que les éclateurs à gaz ayant une tenue en courant de choc plus faible, tels que ceux qui ont été cités plus haut à titre d'exemple. A titre de comparaison, les éclateurs à gaz ayant une tenue en courant de choc de 20 kA en 8/20 µs ou de 5kA en 10/350 µs sont constitués par des éléments cylindriques ayant un diamètre de 8 mm et une longueur de 6 à 8 mm, tandis que les éclateurs à gaz qui ont une tenue en courant de choc de 50 kA en 8/20 µs ou de 15kA en 10/350 µs sont constitués par des éléments également cylindriques ayant un diamètre d'environ 16 mm et une longueur d'environ 30 mm. En outre, les premiers éclateurs indiqués ci-dessus sont des éléments standard, qui sont fabriqués en grande série à un prix de revient de 1,5 Frs la pièce, tandis que les seconds éclateurs, de plus grande tenue en courant de choc, sont des éléments spéciaux, qui sont fabriqués en petite série à un prix de revient d'environ 100 Frs la pièce.

La présente invention a donc pour but de fournir un dispositif parafoudre ayant une tenue renforcée au choc sans utiliser un éclateur à gaz encombrant et coûteux.

A cet effet, le dispositif parafoudre selon l'invention est caractérisé par le fait qu'il comprend un ensemble d'éclateurs à gaz, qui sont connectés en parallèle et qui ont individuellement une tenue en courant de choc inférieure à une tenue en courant de choc souhaitée.

Contrairement à ce que l'on pourrait penser, le montage en parallèle de plusieurs éclateurs à gaz ne permet pas d'augmenter la valeur du courant maximal de décharge (donc la tenue en courant de choc) que le montage parallèle peut laisser passer sans dommage en cas. de surtension transitoire. En effet, du fait de la dispersion des caractéristiques des éclateurs à gaz, leurs tensions d'amorçage ont usuellement des valeurs qui diffèrent légèrement les unes des autres. En conséquence, lorsque survient une surtension transitoire, celui des éclateurs à gaz qui présente la tension d'amorçage la plus faible va s'amorcer en premier et créer un court-circuit aux bornes de tous les autres éclateurs. Normalement, ce court-circuit empêche l'amorçage des autres éclateurs, de sorte que l'on doit s'attendre à ce que tout le courant dû à la surtension provisoire s'écoule à travers l'unique éclateur amorcé. Le montage des éclateurs en parallèle a donc la même valeur intrinsèque de tenue en courant de choc que chaque éclateur individuel. Il était donc à priori surprenant qu'un tel montage en parallèle puisse apporter une solution au problème d'augmentation de la tenue en courant de choc que l'invention avait pour but de résoudre.

Bien que, en principe, la solution apportée par la présente invention ne permette pas d'augmenter la valeur intrinsèque du courant maximal de décharge autorisé pour le dispositif parafoudre, les expériences effectuées par la demanderesse avec divers modèles d'éclateurs ont montré que l'invention permet néanmoins d'améliorer la tenue en courant de choc du dispositif parafoudre.

En effet, si on utilise des éclateurs comportant des électrodes en métal réfractaire, qui ont une fin de vie en circuit ouvert, même s'il survient une surtension transitoire créant une onde de choc de courant dont l'intensité est supérieure au courant maximal de décharge autorisé pour chaque éclateur individuel, et même si l'éclateur sollicité par la surtension a été endommagé par celle-ci, le dispositif parafoudre selon l'invention pourra néanmoins continuer à agir comme dispositif de protection grâce aux éclateurs restants, qui n'ont pas été sollicités par la surtension transitoire, et cela tant qu'il subsistera au moins un éclateur intact.

Il est aussi possible d'utiliser des éclateurs dont les électrodes sont en un métal fusible, de préférence en cuivre ou un alliage à base de cuivre. Les éclateurs de ce type ont une fin de vie en court-circuit, c'est-à-dire que, s'il survient une surtension transitoire créant une onde de choc de courant dont l'intensité est supérieure au courant maximal de décharge autorisé et si l'éclateur sollicité par la surtension a été endommagé par celle-ci, sa résistance devient inférieure à 1 ohm. Les expériences menées par la demanderesse avec ce type d'éclateur ont montré, contre toute attente, qu'en cas de forte surtension transitoire, l'amorçage de l'éclateur ayant la tension d'amorçage la plus faible est suivie de l'amorçage d'au moins un autre éclateur adjacent au premier éclateur, mais pas de tous les éclateurs quand il y en a plus de trois. Ceci est tout à fait surprenant puisque l'amorçage du premier éclateur, qui provoque une mise en court-circuit des autres éclateurs, devrait normalement empêcher l'amorçage de ces derniers. Bien que les raisons de l'amorçage d'au moins un autre éclateur ne soient tout à fait éclaircies, on peut penser que l'arc électrique engendré dans l'éclateur amorcé en premier crée un champ magnétique intense et/ou un éclat lumineux intense qui favorise la création d'un plasma dans le ou les éclateurs adjacents et, par suite, favorise l'amorçage de ces derniers. Dans ce cas, l'onde de choc de courant créée par la surtension transitoire peut s'écouler à travers les deux ou trois éclateurs amorcés. Ceci a pour effet de diviser par deux ou trois l'intensité du courant traversant chacun des éclateurs amorcés et, par suite, d'améliorer la tenue en courant de choc du dispositif parafoudre.

Le dispositif parafoudre selon l'invention est notamment utilisable pour protéger des circuits électriques connectés à un réseau basse tension. Toutefois, dans ce cas, le dispositif parafoudre ne peut pas être constitué uniquement à base d'éclateurs à gaz. En effet, lorsqu'un éclateur à gaz s'amorce à l'arrivée d'une surtension transitoire, l'éclateur passe en régime d'arc, ce qui équivaut à un quasi court-circuit. Le réseau délivrera alors, à travers l'éclateur, un courant proche de son courant de court-circuit, que l'éclateur ne pourra interrompre par auto-extinction. Dans ce cas, il se produira donc systématiquement une mise hors service de l'installation par l'entrée en action des autres dispositifs de protection contre les surintensités (disjoncteur, fusible,...) qui sont usuellement placés en amont de l'installation. Ce comportement n'est pas tolérable puisque chaque action du dispositif parafoudre engendrera une mise en indisponibilité des circuits électriques de l'installation basse tension.

Une solution connue pour remédier à ce problème est de monter, en série avec un éclateur, des composants qui limiteront le courant de court-circuit susmentionné, tout en écoulant l'onde de courant transitoire. Ces composants peuvent être, par exemple, constitués par des varistances, en particulier des varistances à oxyde de zinc.

En conséquence, lorsque le dispositif parafoudre selon l'invention est destiné à protéger un circuit électrique basse tension, il peut comprendre, en outre, à titre d'éléments supplémentaires de protection, en série avec ledit ensemble d'éclateurs, un ensemble de varistances connectées en parallèle les unes aux autres.

L'association en parallèle des varistances est conçue de façon à permettre une répartition équilibrée du courant de choc dans chacune des branches de varistances : pour ce faire, une solution est d'utiliser des varistances ayant des tensions d'écrêtage à 1 mA très voisines, de préférence à ⁺/- 1 %, alors que traditionnellement les varistances sont fournies avec des tolérances de ⁺/- 10 %.

De préférence, comme cela est également connu en soi, aux varistances dudit ensemble de varistances peut être associé au moins un déconnecteur thermique propre à actionner au moins un moyen de signalisation visuelle lorsqu'une ou plusieurs varistances associées subit, ou subissent, une surchauffe anormale.

Dans un mode de réalisation de l'invention, les varistances peuvent être groupées par paires et un déconnecteur thermique peut être associé à chaque paire de varistances. En outre, le ou les déconnecteurs thermiques peuvent être associés de façon connue en soi à un circuit de télésignalisation propre à signaler, par exemple à un poste de surveillance situé à distance, qu'au moins une des varistances associées aux éclateurs présente un défaut et doit être remplacée.

D'autres caractéristiques et avantages de l'invention ressortiront au cours de la description détaillée suivante d'un mode de réalisation de l'invention donné à titre d'exemple en faisant référence aux dessins annexés sur lesquels :
- les figures 1a et 1b représentent de manière schématique un dispositif parafoudre multi-éclateurs selon l'invention, respectivement pendant et après l'écoulement d'un courant de décharge dont l'intensité a dépassé la tenue en courant de choc des éclateurs à gaz composant le dispositif parafoudre ;
- la figure 2 est une vue en coupe longitudinale d'un éclateur utilisable dans le dispositif parafoudre selon l'invention ;
- la figure 3 est un schéma électrique plus détaillé d'un dispositif parafoudre selon l'invention, utilisé pour protéger un réseau basse tension ;
- la figure 4 montre une variante de réalisation du schéma électrique de la figure 3.

En se référant tout d'abord à la figure 1a, le dispositif parafoudre 1 selon l'invention se compose essentiellement de plusieurs éclateurs à gaz, par exemple trois éclateurs 2a, 2b et 2c, connectés en parallèle entre deux bornes de raccordement 3 et 4. La borne 3 est destinée à être raccordée à une ligne (phase ou neutre) d'un circuit électrique à protéger, tandis que la borne 4 est destinée à être raccordée à la terre, de préférence par l'intermédiaire d'éléments limiteurs de courant, comme cela sera décrit plus loin en faisant référence à la figure 3.

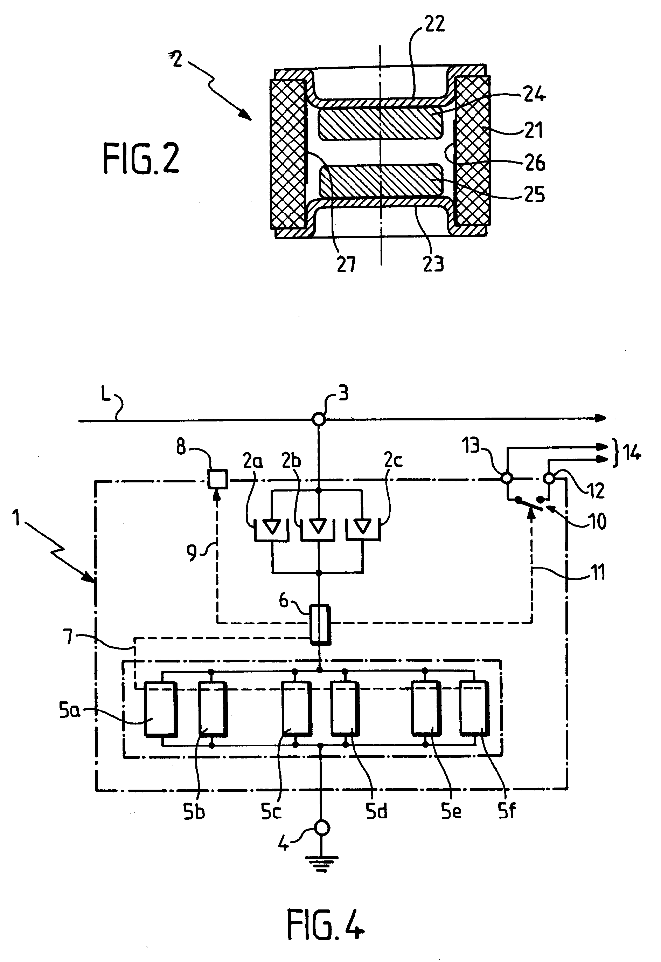

Chacun des trois éclateurs 2a, 2b et 2c peut avoir une structure semblable à celle de l'éclateur 2 représenté sur la figure 2. L'éclateur 2 est constitué par un petit tube 21 en céramique, qui a par exemple un diamètre extérieur de 8 mm et une longueur d'environ 6 mm, et qui est rempli d'un gaz rare. Les extrémités du tube 21 sont obturées hermétiquement par des coupelles métalliques conductrices 22 et 23 qui servent de bornes de contact ou de bornes de connexion lorsque l'éclateur est en service. Les extrémités du tube 21 sont métallisées et les coupelles 22 et 23 sont fixées au tube 21, par exemple par brasage. Deux électrodes 24 et 25 en forme de disque sont fixées respectivement aux coupelles 22 et 23, sur leur face interne, par exemple par brasage. Les deux électrodes 24 et 25 se font mutuellement face avec un espacement prédéfini qui détermine en partie la valeur de la tension d'amorçage de l'éclateur. Afin de faciliter l'amorçage, plusieurs traits de graphite 26, 27 sont, de préférence, formés sur la surface cylindrique intérieure du tube 21, les traits 26 étant en contact électrique avec la coupelle 23 et les traits 27 avec la coupelle 22.

Les électrodes 24 et 25 peuvent être en un métal réfractaire tel que le tungstène, auquel cas l'éclateur 2 a usuellement une fin de vie en circuit ouvert (la tension d'amorçage devient très élevée), ou elles peuvent être en un métal fusible tel que le cuivre ou un alliage à base de cuivre, auquel cas l'éclateur 2 a usuellement une fin de vie en court-circuit (résistance inférieure à 1 ohm).

Si le circuit ou l'installation électrique à protéger contre des surtensions transitoires fonctionne normalement avec une tension alternative d'alimentation de 230 V, les éclateurs à gaz 2a, 2b et 2c peuvent être, par exemple, des éclateurs ayant une tension d'amorçage alternative d'environ 300 V et une tenue en courant de choc de 20 kA en 8/20 µs ou 5 kA en 10/350 µs. Bien entendu, l'invention n'est pas limitée à ces valeurs. C'est ainsi, notamment, que les éclateurs pourront être choisis de manière à présenter une tension d'amorçage plus élevée si les circuits électriques à protéger sont prévus pour fonctionner normalement à une tension d'alimentation elle-même plus élevée, par exemple en 400 V, auquel cas la tension alternative d'amorçage pourra être choisie de façon à être supérieure à 500 V.

L'invention n'est pas non plus limitée à un dispositif parafoudre comportant trois éclateurs en parallèle. Le dispositif parafoudre peut, en effet, comporter autant d'éclateurs en parallèle qu'on le désire, le nombre d'éclateurs étant seulement limité par l'encombrement maximum et/ou le coût maximum qui ont été fixés au préalable pour le dispositif parafoudre. En pratique, le nombre des éclateurs sera limité de façon à ne pas dépasser le coût unitaire d'un éclateur à gaz de plus forte tenue en courant de choc, ou un multiple de ce coût unitaire si on peut accepter d'utiliser plusieurs éclateurs à gaz de plus grande tenue au choc.

Avec le dispositif parafoudre selon l'invention, si on utilise des éclateurs ayant des électrodes réfractaires et s'il se produit une surtension transitoire d'amplitude plus forte que la tension d'amorçage des éclateurs, l'un des éclateurs, par exemple l'éclateur 2a, s'amorcera en premier. L'éclateur qui s'amorce en premier est généralement celui qui a la plus faible tension d'amorçage dynamique. En conséquence, les deux autres éclateurs 2b et 2c seront court-circuités par l'éclateur amorcé 2a et ne pourront pas s'amorcer eux-mêmes. Seul l'éclateur 2a écoulera alors la totalité du courant de décharge créé par l'onde de choc de courant et les deux autres éclateurs 2b et 2c seront préservés.

Si l'onde de courant traversant l'éclateur 2a présente des caractéristiques inférieures à la tenue au choc de cet éclateur, les caractéristiques de base de ce dernier (tension d'amorçage statique, résistance d'isolement, etc...) ne seront pas modifiées et le dispositif parafoudre gardera toute sa capacité de tenue en courant de choc.

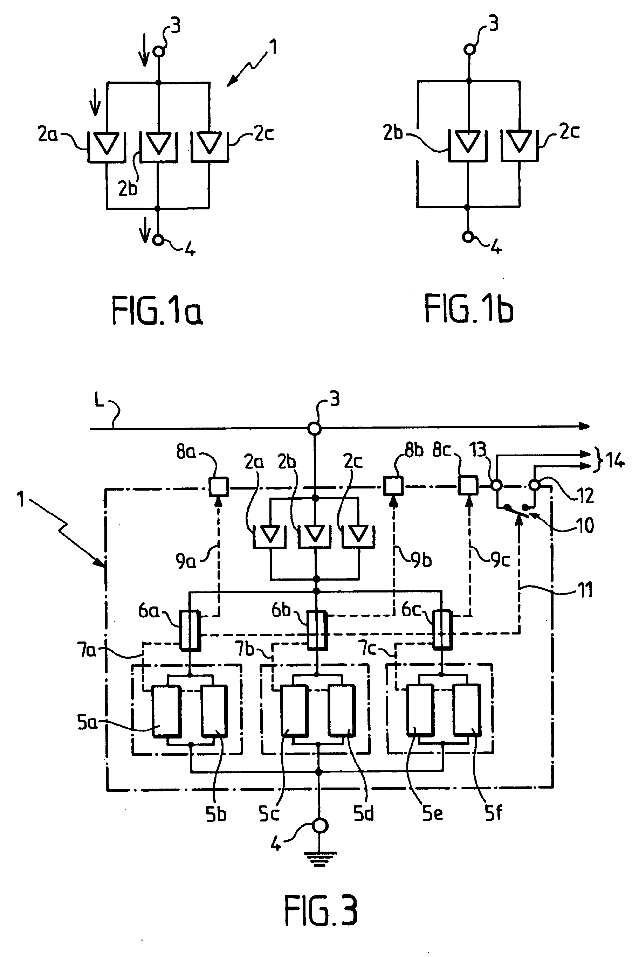

D'un autre côté, si l'onde de courant traversant l'éclateur 2a a une intensité supérieure au courant maximal de décharge de cet éclateur, les caractéristiques de base de ce dernier vont être modifiées. En particulier, sa tension d'amorçage va s'élever fortement au point que, si la caractéristique de tenue en courant de choc de l'éclateur a été fortement dépassée, ledit éclateur pourra passer définitivement dans un état de non-amorçage en circuit ouvert. La situation est alors équivalente à une déconnexion de l'éclateur défaillant 2a, comme montré dans la figure 1b. Le dispositif parafoudre selon l'invention est alors réduit aux deux éclateurs restant en parallèle, à savoir les éclateurs 2b et 2c, mais cela n'affecte pas ses caractéristiques de base puisqu'il sera encore capable de résister au moins une fois et de remplir encore son rôle de dispositif de protection même s'il survient encore une surtension créant une onde de courant dont l'intensité dépasse la tenue en courant de choc de l'un ou l'autre des deux éclateurs restants 2b et 2c. En ce sens, on peut donc dire que le dispositif parafoudre selon l'invention a une tenue en courant de choc plus grande que celle de chacun des éclateurs le composant. Si n désigne le nombre des éclateurs composant le dispositif parafoudre selon l'invention, le nombre de chocs acceptables (sans destruction) est donc égal à n - 1.

En se référant maintenant à la figure 3, on voit à nouveau l'ensemble de trois éclateurs de 2a-2c, connectés en parallèle, la borne de raccordement 3 étant raccordée à une ligne L (phase ou neutre) d'un réseau d'alimentation. L'autre borne de raccordement 4 est raccordée à la terre. Entre l'ensemble des trois éclateurs 2a-2c et la borne 4 est interposé en série un ensemble composé de plusieurs varistances 5a à 5f connectées en parallèle les unes aux autres, par exemple des varistances à oxyde de zinc.

Dans l'exemple représenté, il est prévu six varistances, sans que ce nombre constitue une limitation de l'invention. En fait, le nombre total des varistances est choisi de manière à atteindre un courant de décharge donné et/ou afin d'obtenir un certain degré de redondance pour le cas où une ou plusieurs varistances viendraient à défaillir.

De préférence, les varistances 5a à 5f sont groupées par paires Sa, 5b ; 5c, 5d et 5e, 5f, et à chaque paire de varistances est associé un déconnecteur thermique 6a, 6b, 6c, propre à déconnecter la paire de varistances correspondante par rapport à l'ensemble des éclateurs 2a-2c si l'une et/ou l'autre des deux varistances de la paire associée de varistances subit une surchauffe anormale. Ceci peut arriver, en particulier, en fin de vie des varistances. Dans ce cas, il est nécessaire de déconnecter la ou les varistances défaillantes, car elles pourraient éclater brusquement en provoquant des dégâts aux autres composants environnants (contrairement aux éclateurs à électrodes réfractaires qui meurent en circuit ouvert et sans provoquer de dégât).

Chacun des trois déconnecteurs thermiques 6a, 6b et 6c est en relation thermique avec la paire correspondante de varistances 5a, 5b ; 5c, 5d et 5e, 5f, comme cela est indiqué schématiquement par les liaisons en tirets 7a, 7b et 7c, respectivement. En outre, chaque déconnecteur thermique 6a, 6b ou 6c est agencé pour pouvoir actionner un moyen de signalisation visuelle 8a, 8b ou 8c, comme cela est indiqué schématiquement par la liaison en tirets 9a, 9b ou 9c.

Chaque paire de varistances, comme par exemple la paire 5a, 5b, ainsi que le déconnecteur thermique et le moyen de signalisation visuelle qui sont associés à ladite paire de varistances, comme par exemple le déconnecteur thermique 6a et le moyen de signalisation visuelle 8a, peut être constitué par un module semblable à celui décrit dans la demande de brevet français FR-2 761 543.

En outre, chaque déconnecteur thermique 6a, 6b ou 6c est agencé pour pouvoir agir sur un micro-contact 10, comme cela est indiqué schématiquement par la liaison en tirets 11, afin de faire changer d'état le micro-contact 10 quand l'un des déconnecteurs 6a, 6b ou 6c fonctionne en raison d'une défaillance de l'une des varistances 5a à 5f. Le micro-contact 10 est connecté entre deux bornes de raccordement 12 et 13, qui sont destinées à être raccordées à une ligne bifilaire de télésignalisation 14 aboutissant, par exemple, à un poste de surveillance situé à distance. Ainsi, lorsque le micro-contact change d'état, il est possible de signaler à un opérateur situé à distance que l'un des déconnecteurs thermiques 6a, 6b ou 6c a fonctionné en raison d'une défaillance de l'une des varistances 5a à 5f.

En plus des avantages déjà mentionnés, les autres avantages procurés par un tel montage sont les suivants :
a) le courant de fuite du dispositif parafoudre peut être quasiment supprimé grâce à la résistance d'isolement élevée et à la capacité réduite des éclateurs à gaz ;
b) il est possible d'augmenter (dans une certaine mesure) la tension nominale maximale de fonctionnement, usuellement désignée par Uc, du circuit électrique destiné à être protégé par le dispositif parafoudre, sans influence sur le niveau de protection, usuellement désigné par Up, c'est-à-dire sur la tension qui est effectivement vue par ledit circuit électrique pendant qu'une onde de courant traverse le dispositif parafoudre en raison d'une surtension transitoire. En effet, Uc est déterminée par la tension d'amorçage statique des éclateurs, tandis que Up est déterminée par la tension résiduelle des varistances. Cette caractéristique permet l'utilisation du dispositif parafoudre sur des réseaux électriques instables et fluctuants.

Dans le mode de réalisation représenté sur la figure 3, il est prévu de grouper les varistances 5a à 5f par paires et d'associer à chaque paire de varistances un déconnecteur thermique 6a, 6b ou 6c, lui-même agencé pour pourvoir actionner un moyen de signalisation visuelle 8a, 8b ou 8c, respectivement. Toutefois, l'invention n'est pas limitée à un tel agencement. En effet, comme montré dans la figure 4, on peut aussi adopter un agencement plus simple, dans lequel un seul déconnecteur thermique 6 est associé à toutes les varistances 5a à 5f, comme cela est indiqué schématiquement par la liaison en tirets 7. Il est alors prévu un unique moyen de signalisation visuelle 8 relié au déconnecteur thermique 6 par la liaison 9. Pour le reste, le schéma de la figure 4 est identique à celui de la figure 3 et ne sera donc pas à nouveau décrit en détail.

L'agencement représenté sur la figure 4 convient par exemple lorsqu'on utilise comme éclateurs 2a à 2c, des éclateurs à électrodes fusibles qui ont une fin de vie en court-circuit. Dans ce cas, s'il se produit une surtension transitoire d'amplitude plus forte que la tension d'amorçage des éclateurs et si l'onde de courant de choc est de faible amplitude, l'éclateur ayant la tension d'amorçage dynamique la plus faible écoulera la totalité du courant de décharge sans que les caractéristiques de base de cet éclateur ne soient modifiées, comme dans le cas où on utilise des éclateurs à électrodes réfractaires.

Si l'onde de courant de choc est de forte amplitude, l'éclateur le plus "faible" s'amorce, suivi quasiment instantanément d'un ou deux autres éclateurs adjacents à l'éclateur le plus "faible". Il en résulte que le courant de décharge (Ichoc) écoulé par chaque éclateur amorcé est divisé approximativement par deux ou trois. Si Ichoc/2 ou Ichoc/3, selon le cas, est inférieur au courant maximal de décharge (Imax) admissible pour chacun des éclateurs amorcées, ceux-ci ne seront pas détériorés et le dispositif parafoudre pourra, à nouveau, fonctionner s'il survient ultérieurement une autre surtension transitoire.

Par contre, si l'onde de courant de choc avait une très forte amplitude (Ichoc/2 ou Ichoc/3 > Imax), au moins un des éclateurs amorcés se met et reste en court-circuit après écoulement de l'onde de choc. Ceci va déclencher la fin de vie du dispositif parafoudre. En effet, dans ce cas, la fin de vie de l'éclateur resté en court-circuit et, par suite, de l'ensemble du circuit va être clairement signalée à la fois par le moyen de signalisation visuelle 8 (figure 4) et par la ligne de télésignalisation 14 si elle est présente. En effet, le réseau d'éclateurs 2a à 2c en parallèle ayant une tenue en courant de choc moindre que le réseau de varistances 5a à 5f, si l'un des éclateurs reste en court-circuit après un courant de choc excessif, les varistances 5a à 5f sont alors soumises à la tension du réseau électrique. Comme cette dernière est supérieure à la tension de fonctionnement des varistances, celles-ci vont alors fonctionner en écrêtage permanent pendant quelques secondes, puis elles s'emballeront thermiquement. Cela a pour effet de déclencher le déconnecteur thermique 6 qui, à son tour, ouvre le circuit (et donc interrompt le courant de défaut) et actionne le moyen de signalisation visuelle 8 et le micro-contact 10 connecté à la ligne de télésignalisation 14.

Il est bien entendu que les modes de réalisation du dispositif parafoudre qui ont été décrits ci-dessus ont été donnés à titre d'exemple purement indicatif et nullement indicatif, et que de nombreuses modifications peuvent être apportées par l'homme de l'art sans pour autant sortir du cadre de l'invention. C'est ainsi notamment que le nombre d'éclateurs peut être plus petit (mais au moins égal à deux) ou plus grand que celui de l'exemple représenté sur les figures 1a, 3 et 4.

## Revendications

1. Dispositif parafoudre pour la protection d'un circuit électrique connecté à un réseau à basse tension contre des surtensions transitoires, comprenant au moins un élément de protection constitué par un éclateur à gaz, caractérisé par le fait qu'il comprend un ensemble d'éclateurs à gaz (2a-2c) connectés en parallèle et qui ont individuellement une tenue en courant de choc inférieure à une tenue en courant de choc souhaitée.

2. Dispositif parafoudre selon la revendication 1, caractérisé par le fait que chaque éclateur (2) est constitué par un petit tube (21) en céramique, qui est rempli d'un gaz rare et dont les extrémités sont obturées hermétiquement par des coupelles métalliques conductrices (22 et 23) formant bornes de contact, deux électrodes (24 et 25) en forme de disque étant fixées respectivement aux coupelles (22 et 23), sur leur face interne, de façon à se faire mutuellement face avec un espacement prédéfini.

3. Dispositif parafoudre selon la revendication 2, caractérisé par le fait que les électrodes (24 et 25) sont en un métal réfractaire, de préférence en tungstène.

4. Dispositif parafoudre selon la revendication 2, caractérisé par le fait que les électrodes (24 et 25) sont en un métal fusible, de préférence en cuivre ou un alliage à base de cuivre.

5. Dispositif parafoudre selon l'une quelconque des revendications 1 à 4, pour un circuit électrique basse tension, caractérisé par le fait qu'il comprend, en outre, à titre d'éléments de protection, en série avec ledit ensemble d'éclateurs (2a-2c), un ensemble de varistances (5a-5f) connectées en parallèle les unes aux autres.

6. Dispositif parafoudre selon la revendication 5, caractérisé par le fait qu'aux varistances dudit ensemble de varistances (5a-5f) est associé au moins un déconnecteur thermique (6a-6c) propre à actionner au moins un moyen de signalisation visuelle (8a-8c) lorsqu'une ou plusieurs varistances associées (5a-5f subissent une surchauffe anormale.

7. Dispositif parafoudre selon la revendication 6, caractérisé par le fait que les varistances (5a-5f) sont groupées par paires (5a, 5b ; 5c, 5d et 5e, 5f) et qu'un déconnecteur thermique (8a ou 8b ou 8c) est associé à chaque paire de varistances.

8. Dispositif parafoudre selon la revendication 6 ou 7, caractérisé par le fait que le ou les déconnecteurs thermiques (8a, 8b, 8c) est ou sont associés à un circuit de télésignalisation (14).

9. Dispositif parafoudre selon la revendication 5, caractérisé par le fait que les varistances (5a, 5f) connectées en parallèle les unes aux autres ont des tensions d'écrêtage à 1 mA voisines, de préférence à ⁺/- 1 %.
